# FASCICULE DE BREVET EUROPEEN

(11) **EP 1 678 000 B1**
(45) Date de publication et mention de la délivrance du brevet: **17.03.2010**
(21) Numéro de dépôt: 04787295.7
(22) Date de dépôt: 02.09.2004
(51) Int. Cl.: B60J 7/14

(54) **VEHICULE AUTOMOBILE DECOUVRABLE**
KABRIOLETT
CONVERTIBLE MOTOR VEHICLE

(30) Priorité: 02.09.2003 FR 0350491
(43) Date de publication de la demande: 12.07.2006
(73) Titulaire: RENAULT S.A.S., 92100 Boulogne Billancourt (FR)
(72) Inventeur: VASSEUR, Patrice, F-75007 Paris (FR)
(74) Mandataire: Guyon, Rodolphe C.
(86) Numéro de dépôt international: PCT/FR2004/002240
(87) Numéro de publication internationale: WO 2005/023572

(56) Documents cités:
- EP-A- 0 850 792
- DE-C- 10 006 296
- DE-U- 29 817 837
- FR-A- 2 744 957

## Description

Cette invention concerne, selon le préambule de la revendication 1, un véhicule automobile découvrable, c'est-à-dire au toit s'ouvrant complètement et escamotable.

Un exemple d'un tel véhicule est le brevet allemand DE 10006296 C. Un autre exemple est le brevet français FR 2 744 957. Le véhicule comprend une paire de brancards latéraux s'élevant sur le châssis et servant de cadre aux vitres latérales. Un pavillon de toit et une lunette arrière sont soutenus entre les brancards quand l'habitacle est fermé, et retirés dans le cas contraire. Le pavillon est composé de lamelles articulées entre elles qu'on enroule dans un caisson à la façon d'un volet roulant, et la lunette arrière bascule autour de son extrémité arrière dans un coffre. Construire le pavillon en lamelles articulées est donné comme préférable à un pavillon en toile pour la rigidité et pour l'aspect du véhicule, mais il n'est pas certain que cette solution soit la meilleure ; et le basculement de la lunette arrière vers le bas pour la ranger dans le coffre n'est concevable qu'avec un véhicule au coffre arrière de grand volume.

Une autre construction de toit complètement escamotable pour un véhicule est proposée avec l'invention. Le pavillon a une structure plus simple ; il est plus harmonieux et résistant ; et le toit peut se ranger facilement dans un coffre arrière d'un véhicule au profil effilé à l'arrière, probablement plus séduisant pour la clientèle de tels véhicules.

Selon l'invention, le pavillon est composé de panneaux (rigides et peu nombreux) articulés entre eux et le véhicule comprend encore au moins une bielle articulée par des extrémités opposées à un des panneaux et à une portion arrière d'un des brancards.

Cette disposition permet de ranger le pavillon dans le coffre commodément, sans recourir à un mécanisme roulant. Ordinairement, le pavillon est composé de deux panneaux dont un panneau antérieur, à l'extrémité arrière duquel la bielle est articulée, et un panneau central articulé à un des brancards à une extrémité arrière et essentiellement parallèle à la bielle. Les panneaux sont alors déplacés simultanément pour les ranger dans le coffre et se replient avant de se superposer dans le coffre, qui peut ainsi être de surface réduite.

Selon un autre perfectionnement, la lunette arrière est articulée au châssis par un mécanisme à bielles se croisant en anti-parallélogramme.

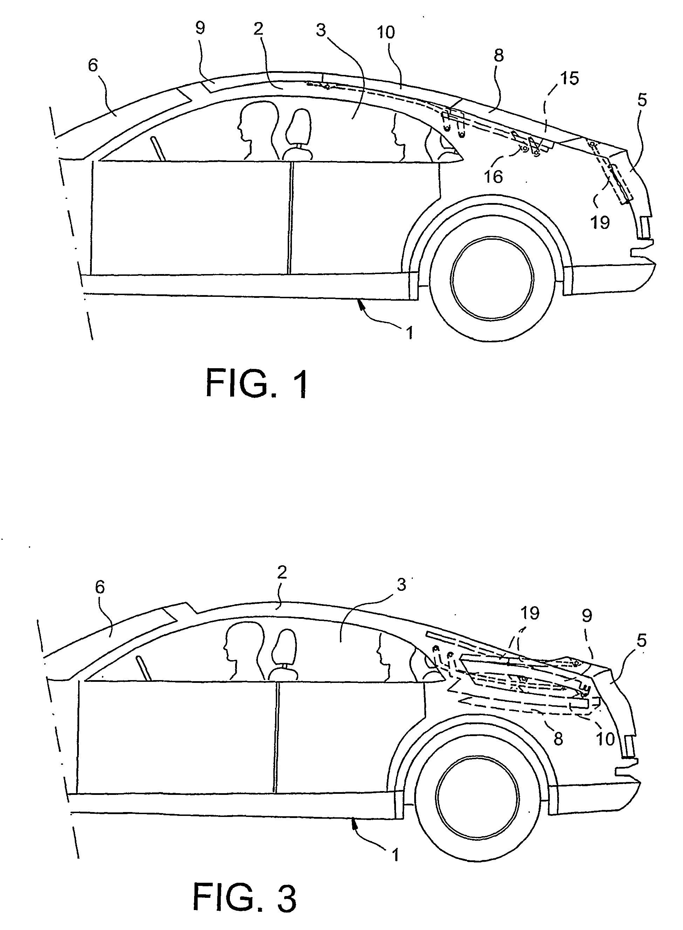

Un exemple de l'invention sera décrite plus en détail aux moyens des figures 1, 2 et 3, qui illustrent le véhicule avec des éléments de toit respectivement à l'état de montage sur l'habitacle, à un état transitoire intermédiaire et à l'état escamoté, ou rangé, dans le coffre.

Le véhicule comprend d'abord un châssis 1 sur lequel s'élèvent deux brancards 2 latéraux et parallèles au-dessus des portières et des vitres latérales, en forme d'arceau et qui contribuent à border un habitacle 3. Un seul des brancards 2 est effectivement représenté, l'autre étant semblable et parallèle. De tels brancards 2 contiennent souvent des coussins gonflables de protection des têtes des passagers et peuvent donc contribuer à rendre le véhicule plus sûr qu'un cabriolet à l'habitacle complètement ouvert. Le véhicule comprend encore un coffre arrière 4 pouvant être fermé par une porte 5, ainsi qu'un pare-brise 6.

Le toit comprend un pavillon 7 au sommet de l'habitacle 3 et une lunette arrière 8 à l'arrière de l'habitacle 3. Le pavillon 7 comprend un panneau antérieur 9 et un panneau central 10. Les panneaux 9 et 10 sont articulés entre eux par une charnière 11 ; le panneau central 10 est articulé à son extrémité arrière par un bras 12 court à l'un des brancards 2, et le panneau antérieur 9 est articulé à son extrémité arrière, non loin de la charnière 11, à une bielle 13 qui est parallèle au panneau central 10 et dont l'extrémité arrière est articulée au brancard 2.

Le bras 12 et la bielle 13 sont plus précisément articulés à l'arrière du brancard 2 par une plaquette de support 14. La bielle 13 ayant une longueur à peu près semblable à la distance entre la charnière 11 et le point d'articulation du bras 12, une disposition en parallélogramme est obtenue.

Le mécanisme de support de la lunette arrière 8 comprend deux bielles 15 et 16 articulées à une plaquette de support 17 du châssis 1 et à la lunette arrière 8 et prenant deux états principaux : elles sont sensiblement parallèles dans le premier, qui correspond à l'état de déploiement de la lunette arrière 8 et de fermeture de l'habitacle 3 (figure 1), mais croisées dans le second, qui correspond à l'état de rangement de la lunette arrière 8 dans le coffre 4. Cette disposition des bielles 15 et 16 est dite en anti-parallélogramme. Elle permet de basculer rapidement la lunette arrière 8 et de la descendre dans le coffre 4 en n'effectuant qu'un mouvement de translation modéré vers l'arrière. La trajectoire de rangement est donc de faible ampleur, et la prédominance du basculement permet de dégager plus rapidement la lunette arrière 8 des bandes d'étanchéité 18 qui l'unissent au châssis 1 à l'état monté, en surmontant un moindre effort de frottement.

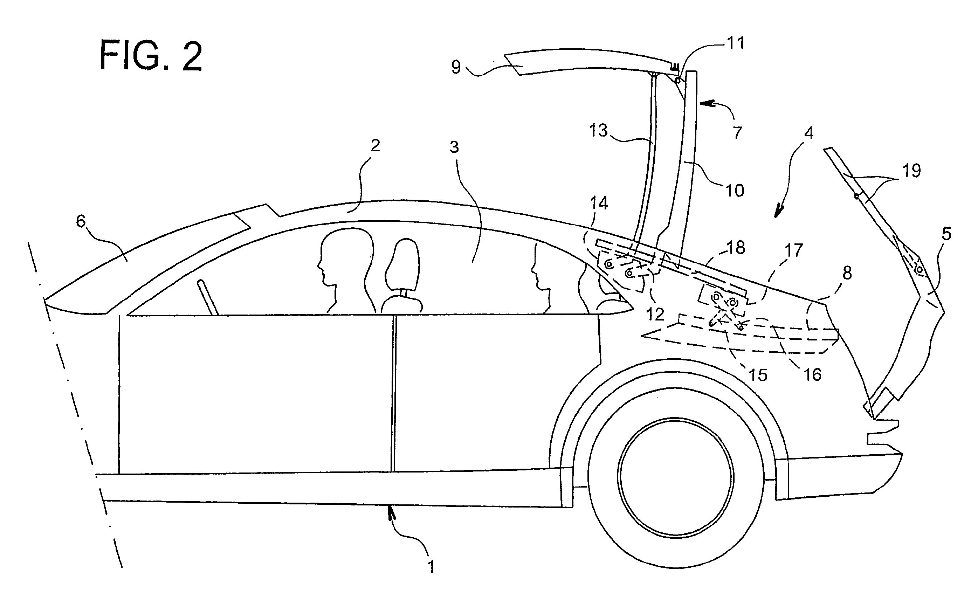

Le rangement du toit à partir de l'état de la figure 1 consiste d'abord à faire basculer la lunette arrière 8 autour des bielles 15 et 16 afin de l'abaisser. Ensuite, le pavillon 7 est lui aussi rangé en faisant tourner la bielle 13 et le bras 12 pour rejeter les panneaux 9 et 10 vers l'arrière tout en les pliant ; cet état est celui de la figure 2. Quand un demi-tour a été accompli, la lunette arrière 8, le panneau central 10 et le panneau antérieur extrême 9 sont superposés dans le coffre 4, dont la porte 5 peut être refermée.

Le mécanisme en parallélogramme maintient le panneau antérieur 9 à peu près horizontal. Il est à remarquer que l'absence de la lunette arrière laisse un vide derrière l'habitacle 3, qu'il est possible de couvrir par une disposition particulière de la porte 5, sous forme d'un ou deux panneaux 19 articulés au bord libre avant de la porte 5, qui sont repliés sous le reste de la porte 5 quand le toit est monté mais qui sont déployés vers l'avant quand il est rangé, et qui allongent la porte jusqu'à l'habitacle 3 pour fermer complètement le coffre 4. Cet état final est représenté à la figure 3.

Des étapes inverses permettraient de déployer le toit de nouveau. Les mécanismes de support des panneaux 9 et 10 et de la lunette arrière 8 sont normalement présents de chaque côté du véhicule, sans que cela soit indispensable à l'invention.

Les mouvements peuvent être manuels ou accomplis par des vérins ou d'autres actionneurs, ainsi que cela est connu dans l'art.

## Revendications

1. Véhicule automobile comprenant un châssis (1), un coffre (4) arrière, des brancards (2) latéraux s'élevant du châssis entre un pare-brise (6) et le coffre arrière, et un toit composé d'un pavillon (7) et d'une lunette arrière (8), s'étendant entre les brancards, du pare-brise au coffre, et complètement escamotable pour être rangé dans le coffre, le pavillon étant composé de panneaux articulés (9, 10) entre eux, **caractérisé en ce qu'**il comprend au moins une bielle (13) articulée par des extrémités opposées à un des panneaux (9) et à une portion arrière d'un des brancards (2).

2. Véhicule automobile selon la revendication 1, **caractérisé en ce que** le pavillon est composé de deux panneaux, dont un panneau antérieur (9), à une extrémité arrière duquel la bielle (13) est articulée et un panneau central (10) articulé à un des brancards (2) à une extrémité arrière et essentiellement parallèle a la bielle (13).

3. Véhicule automobile selon l'une quelconque des revendications 1 ou 2, **caractérisé en ce que** la lunette arrière (8) est articulée au châssis par un mécanisme à bielles (15, 16) à disposition en anti-parallélogramme.

4. Véhicule automobile selon la revendication 2, **caractérisé en ce que** la lunette arrière (8), le panneau central (10) et le panneau antérieur (9) sont superposés dans le coffre à un état d'escamotage du toit.

5. Véhicule automobile selon l'une quelconque des revendications précédentes, **caractérisé en ce qu'**il comprend au moins un panneau articulé (19) prolongeant un bord libre avant d'une porte (5) du coffre arrière jusqu'à un bord arrière d'habitacle (3).

## Claims

1. Motor vehicle comprising a chassis (1), a rear boot (4), lateral side rails (2) rising from the chassis between a windscreen (6) and the rear boot, and a top composed of a roof (7) and a rear window (8), lying between the side rails, from the windscreen to the boot, and completely retractable in order to be stowed in the boot, the roof being composed of hinged panels (9, 10) connected together, **characterized in that** it comprises at least one rod (13) hinged at opposite ends to one of the panels (9) and to a rear portion of one of the side rails (2).

2. Motor vehicle according to Claim 1, **characterized in that** the roof is composed of two panels, including a front panel (9), to one rear end of which the rod (13) is hinged, and a centre panel (10) hinged to one of the side rails (2) at a rear end and generally parallel to the rod (13).

3. Motor vehicle according to either of Claims 1 or 2, **characterized in that** the rear window (8) is hinged to the chassis by a rod mechanism (15, 16) with a crossed-quadrilateral arrangement.

4. Motor vehicle according to Claim 2, **characterized in that** the rear window (8), the centre panel (10) and the front panel (9) are stacked in the boot when the top is in a retracted state.

5. Motor vehicle according to any one of the preceding claims, **characterized in that** it comprises at least one hinged panel (19) extending a free front edge of a rear boot lid (5) to a rear edge of a passenger compartment (3).

## Patentansprüche

1. Kraftfahrzeug mit einem Chassis (1), einem hinteren Kofferraum (4), seitlichen Längsträgern (2), die sich zwischen einer Frontscheibe (6) und dem hinteren Kofferraum vom Chassis erheben, und einem Dach, das aus einem Verdeck (7) und einem Rückfenster (8) besteht, sich von der Frontscheibe bis zum Kofferraum zwischen den Längsträgern erstreckt und zum Verstauen im Kofferraum vollkommen einklappbar ist, wobei das Verdeck aus zwischen sich gelenkigen Feldern (9, 10) besteht, **dadurch gekennzeichnet, dass** es mindestens eine Stange (13) umfasst, die an gegenüberliegenden Enden an einem der Felder (9) und an einem hinteren Abschnitt eines der Längsträger (2) angelenkt ist.

2. Kraftfahrzeug nach Anspruch 1, **dadurch gekennzeichnet, dass** das Verdeck aus zwei Feldern besteht, einschließlich eines vorderen Felds (9), wobei die Stange (13) an einem hinteren Ende davon angelenkt ist, und eines mittleren Felds (10), das an einem hinteren Ende und im Wesentlichen parallel zu der Stange (13) an einem der Längsträger (2) angelenkt ist.

3. Kraftfahrzeug nach Anspruch 1 oder 2, **dadurch gekennzeichnet, dass** das Rückfenster (8) über einen Gestängemechanismus (15, 16) mit einem Viergelenksystem am Chassis angelenkt ist.

4. Kraftfahrzeug nach Anspruch 2, **dadurch gekennzeichnet, dass** das Rückfenster (8), das mittlere Feld (10) und das vordere Feld (9) im zusammengeklappten Zustand des Dachs im Kofferraum übereinander liegen.

5. Kraftfahrzeug nach einem der vorhergehenden Ansprüche, **dadurch gekennzeichnet, dass** es mindestens ein angelenktes Feld (19) umfasst, das einen freien vorderen Rand einer Klappe (5) des hinteren Kofferraums bis zu einem hinteren Rand der Fahrgastzelle (3) verlängert.
